Europäisches Patentamt

European Patent Office

Office européen des brevets

(11) Veröffentlichungsnummer: **0 042 598**
**A1**

(12) **EUROPÄISCHE PATENTANMELDUNG**

(21) Anmeldenummer: **81104720.8**

(22) Anmeldetag: **19.06.81**

(51) Int. Cl.³: **G 01 N 3/00**
**G 01 N 33/24**

(30) Priorität: **24.06.80 CH 4832/80**

(43) Veröffentlichungstag der Anmeldung:
**30.12.81 Patentblatt 81/52**

(84) Benannte Vertragsstaaten:
**BE DE FR GB IT**

(71) Anmelder: **GEORG FISCHER AKTIENGESELLSCHAFT**
**Mühlentalstrasse 105**
**CH-8201 Schaffhausen(CH)**

(72) Erfinder:
**Der Erfinder hat auf seine Nennung verzichtet**

(54) **Sandprüfgerät.**

(57) Ein Sandprüfgerät verbindet mehrere Prüfmethoden in einem Gerät und spart dadurch Komponenten die bei Verwendung von Einzelgeräten jeweils mehrfach vorhanden sein müssen. Zur Prüfung der Druck- und Biegegestigkeit sowie der Verdichtbarkeit wird auf einen Probekörper (7,11) bzw. auf eine Sandschüttung (22) Druck ausgeübt, wobei im Falle der beiden Festigkeitsprüfungen der Druck bzw. die Kraft im Moment des Bruchs und bei der Verdichtbarkeitsmessung der Verdichtungsweg bei einem bestimmten Druck gemessen wird. In einem Auswertegerät (37 - 44) werden die Messwerte, welche von einem Quarzkristall (31) und dem Wegmesser (32), der aus einer Induktionsspule (33) mit verschiebbarem Anker (34) besteht, geliefert werden, aufbereitet und mittels fester Schaltungen weiter verarbeitet. Durch Vorwahl der gewünschten Messwertart wird diese angezeigt und/oder ausgedruckt.

Fig. 4

EP 0 042 598 A1

0042598

GEORG FISCHER AKTIENGESELLSCHAFT,    · 8201 Schaffhausen

2170/GAP / 22.4.1981 / Li-bs /

Sandprüfgerät

Die Erfindung bezieht sich auf ein Sandprüfgerät nach dem
Oberbegriff des Anspruchs 1.

Es sind Sandprüfgeräte bekannt wie z.B. der Festigkeitsprüfapparat Typ PFG der Firma GEORG FISCHER AG (Prospekt
GM 711-26.1/1) wobei ein Prüfkörper zwischen einen feststehenden und einen beweglichen Backen eingespannt werden.
Der bewegliche Backen wird sodann mittels einer Drehspindel in Richtung auf den anderen Backen vorgetrieben
bzw. belastet. In der Kraftübertragungskette ist ein
Druckmesser eingebaut, dessen Messgrösse an ein Manometer
übertragen wird. Der Druck, der im Augenblick des Bruchs
des Probekörpers gemessen wird muss als spezifische Druckfestigkeit abgelesen werden.

Ein anderes Gerät dient zur Bestimmung der Biegefestigkeit,
wobei ein Normstab aus verdichtetem Sand auf zwei Schneiden
gelegt und mittels einer dritten Schneide von der anderen
Seite her zwischen den beiden Stützschneiden belastet wird.
Auch hier wird der Druck beim Bruch gemessen und die
spezifische Biegefestigkeit abgelesen.

Die Verdichtbarkeit des Sandes wurde bisher mittels eines weiteren Gerätes gemessen (+GF+-Prospekt Nr. GM 711-20/1), wobei eine zylindrische Sandschüttung durch einen Kolben unter einer bestimmten Kraft komprimiert und dadurch verdichtet wird, wobei die Höhenverminderung bei einer gewissen Kraft ein Mass für die Verdichtbarkeit darstellt.

Alle diese Apparate haben den Nachteil, dass sie immer nur für eine Art von Prüfung verwendbar sind, und auch nur jeweils einen Messwert liefern.

Die Erfindung hat zur Aufgabe, diesen Nachteil zu beheben und ein Gerät vorzuschlagen, mit welchem mehrere Prüfungen verschiedener Art durchführbar sind, wobei Gerätekomponenten, welche bei mehreren Prüfungen eingesetzt werden nur mehr einmalig ausgeführt werden wobei auch eine Kosteneinsparung erfolgt. Das Gerät soll ausserdem eine einfachere Ablesung der gemessenen Werte ermöglichen.

Erfindungsgemäss wird diese Aufgabe durch ein Sandprüfungsgerät der eingangs genannten Art gelöst, welches ferner die im Kennzeichen des Anspruches 1 aufgeführten Merkmale aufweist.

Die erfindungsgemässen Merkmale ermöglichen die Prüfung der Druck- und Biegefestigkeit sowie die Verdichtbarkeit von aus Giessereisand bestehenden Probekörpern bzw. Sandschüttungen mit einem Prüfgerät, wobei durch umschalten der Schaltkreise die jeweilige Prüfart einstellbar und die Messergebnisse einfach feststellbar sind.

Weitere vorteilhafte Ausgestaltungen der Erfindung sind in den abhängigen Ansprüchen gekennzeichnet.

Die Erfindung wird im Folgenden an Hand der Zeichnung näher erläutert.

Es zeigen:

Fig. 1       schematisch die Aktionseinheit des Prüfgerätes
bis 3        bei drei verschiedenen Prüfungsarten, und

Fig. 4       die Auswerteeinrichtung im Blockschaltbild.


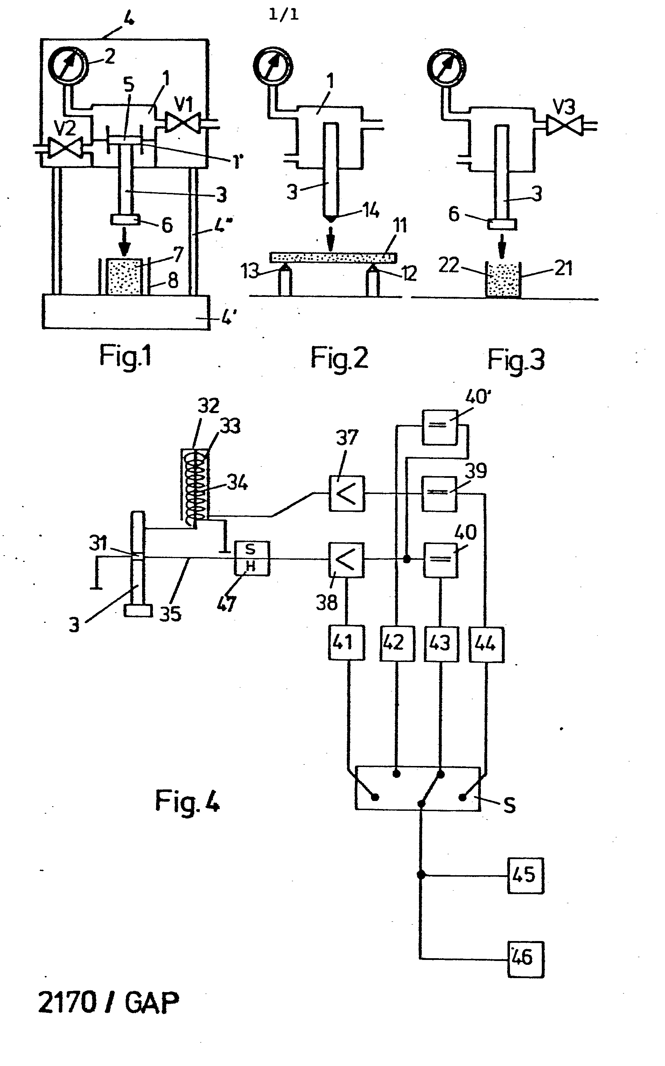

In der Fig. 1 ist in einem, mittels Säulen 4'' auf einer Grundplatte 4' ruhenden Gehäuse 4 schematisch ein Druckgefäss 1 mit doppel wirkendem Zylinder 1' dargestellt, in welches durch Oeffnen des Ventils V1 Druckluft von einem nicht dargestellten Kompressor her eingeleitet werden kann. Ein Ventil V2 dient dem Ablassen der Druckluft. Mit dem Gefäss 1 ist ferner ein Manometer 2 verbunden, welches immer den aktuellen Druck im Gefäss 1 anzeigt.

Von unten her ragt ein Schiebekolben 5 mit einer Kolbenstange 3 in das Gefäss 1, welcher mit einer Kraft, welche gleich ist dem Druck im Gefäss 1 multipliziert mit dem Querschnitt             des Kolbens 5 nach unten gedrückt wird. Der Druckzylinder ist als Doppelwirkzylinder ausgeführt, wobei die beiden Ventile V1 und V2 beim Abwärts- und Aufwärtsfahren des Kolbens 5 jeweils entgegengesetzte Funktionen haben. Auf diese Weise wird beim Abwärtsfahren durch das Ventil V1 Druckluft in den oberen Zylinderteil eingelassen, während die vom unteren Zylinderteil durch das Ventil V2 entweicht, und beim Aufwärtsfahren umgekehrt. Die Kolbenstange 3 bildet gleichzeitig das Druckwerkzeug 3.

Ebensogut könnten aber im oberen und unteren Zylinderteil jeweils ein Einlass- und ein Auslassventil vorgesehen sein. Die Geschwindigkeit und die Kraft des Kolbens ist durch die Strömungseigenschaften der Ventile bzw. den zeitlichen Verlauf des Druckaufbaus im Gefäss bestimmt.

Trifft der Kolben auf einen Widerstand, so wird die Bewegung verzögert oder stillgesetzt und der Druck im Gefäss steigt schneller an, bis bei Erreichen eines bestimmten Druckwertes der Widerstand überwunden ist, was sich in einer ruckartigen Entspannung des Druckes im Gefäss 1 und dem maximalen Ausfahrens des Kolbens bemerkbar macht. Dieser Ruck wird in einem Auswertegerät registriert und zusammen mit anderen Daten verarbeitet.

Im dargestellten Fall der Fig. 1 weist das Druckwerkzeug 3 an seiner Unterseite eine zylindrische Scheibe 6 auf, deren Durchmesser demjenigen eines ebenfalls zylindrischen Sandprobekörpers 7 entspricht, der in einer Schale 8 unter dem Kolben zentrisch angeordnet ist. Durch Oeffnen des Ventils V1 wird der Sandprobekörper 7 zwischen der Scheibe 6 und dem Boden der Schale 8 unter Druck gesetzt, wobei der Druck so lange langsam und stetig gesteigert wird, bis der Probekörper zerdrückt wird. Zum Auffangen des dabei entstehenden Sandes wird der Probekörper 7 in der Schale 8 angeordnet.

In der Fig. 2 ist dasselbe Gerät dargestellt, wobei Teile welche die gleiche Funktion erfüllen wie in Fig. 1 weggelassen wurden. Im Unterschied zur Druckfestigkeit wird hier die Biegefestigkeit geprüft, wobei ein stabförmiger Probekörper 11 auf zwei Lagerschneiden 12 und 13 ruht und zwischen diesen von ober her durch eine Prüfschneide 14 belastet wird. Da die Durchbiegung des Stabes 14 eher vernachlässigbar gering ist, ist ebenso wie bei der Druckfestigkeitsprüfung nur der Druck interessant bei dem der Stab bricht.

Die Fig. 3 zeigt eine Anordnung zur Verdichtbarkeitsprüfung, wobei in ein Zylindergefäss 21 eine Sandschüttung 22 ohne Vorverdichtung eingebracht wurde, welche dann durch das Druckwerkzeug 3 bzw. durch die daran angeordnete Scheibe 6 bei der Abwärtsbewegung des Kolbens verdichtet wird. Der Kolbenweg bis zum Stillstand desselben bei einem bestimmten Druck ist proportional zur Volumenabnahme der Schüttung 22 und daher ein Mass für die Verdichtbarkeit.

Zur Einstellung eines bestimmten Enddruckes wird anstelle des Ventils V1 der Fig. 1 ein Druckregelventil V3 geöffnet, welches den Druck im Gefäss nur auf einen bestimmten Wert ansteigen lässt, der dem Messdruck für die Verdichtbarkeit entspricht. Das Ventil V3 wird hierzu parallel zum Ventil V1 geschaltet, wobei für die ersten beiden Prüfmethoden das Ventil V1 und für die Verdichtbarkeitsprüfung das Ventil V3 geöffnet wird.

Die Fig. 4 zeigt ein Prinzipschaltbild der Auswerteeinrichtung, wobei die Eingangsgrössen von einer Druckmesseinrichtung und einer Wegmess-Einrichtung kommen, dem Quarzkristall 31 und dem induktiven Wegmesser 32. Der Quarzkristall ist zwischen zwei Längsteilen des Kolbens 5 oder des Druckwerkzeuges 3 angeordnet, welche bei Belastung nach einer der Fig. 1 bis 3 zusammengepresst werden, wobei der unter Druck stehende Quarz eine Piezoelektrische Spannung durch ein Kabel 35 an das Auswertegerät weiter leitet.

Die Wegmessung in dem Induktionsmesser erfolgt ebenfalls auf bekannte Weise, wobei ein mit der Kolbenstange 3 verbundener ferromagnetischer Anker 34 bei Bewegung der Kolbenstange 3 mehr oder weniger weit in die Induktionsspule 33 hineingeschoben wird, so dass durch Messung der Induktion bzw. der Impedanz der Spule ein Wert für die genaue Position des Kolbens erhalten wird.

Im Verlauf einer Prüfung durchläuft einer der beiden oder auch beide Messwerte einen bestimmten Bereich, beispielsweise von null bis zu einem bestimmten Maximalwert und springt hierauf beispielsweise beim Bruch des Probekörpers im Fall der Druckmessung auf einen niedrigeren Wert zurück, wobei der für die Auswertung interessante Maximalwert beispielsweise in einer "Sample-and-Holdschaltung" bzw. einem Maximalwertspeicher 47 gespeichert wird. Die Wegmessung bei der Verdichtbarkeitsprüfung braucht keine Speicherung, da der Kolben bei Erreichen des Messwerts zum Stillstand kommt und dort verbleibt bis der Druck entspannt wird.

Bei einem Biegeversuch, bei dem auch die Durchbiegung gemessen wird, wobei nach erfolgtem Bruch die Stellung des Kolbens im Moment des Bruches gemessen werden sollte, wäre eine Differenzierung des Wegsignals denkbar, wodurch der durch die Unstetigkeit des aktuellen Messwertes entstandene Impuls die Speicherung des Messwerts auslösen könnte.

Diese Messmethode ist jedoch bei Sandprüfungen unwichtig da man es hier mit starren und spröden Prüfkörpern zu tun hat, die sich nur unwesentlich verbiegen bevor sie zu Bruch gehen.

Die Messwerte von den Wandlern 31 und 32 werden mittels Verstärkern 37 und 38 aufbereitet und in Operationsstufen 39, 40 und 40' entsprechend festgelegter mathematischer Formeln umgeformt, um aus den Druck- oder Wegwerten Absolutwerte für die Festigkeiten oder die Verdichtbarkeit zu erhalten, wobei die Operationsstufe 40 die Druckfestigkeit, die Stufe 40' die Biegefestigkeit und die Stufe 39 die Eichung des Wegsignals ergibt.

In den Formeln sind die geometrischen Werte der Prüfgeometrie und der Probekörper fest oder einstellbar enthalten.

Um die Messwerte von Weg, Druck oder Festigkeiten anzeigen oder ausdrucken zu können, werden die Signale der Verstärker und Operationsstufen mittels Analog-Digital-Wandlern 41 bis 44 aufbereitet und einer 7-Segmentanzeige 45 und einem Drucker 46 zugeführt, wobei durch einen Wählschalter S jeweils eine der Prüfarten vorgewählt werden kann.

0042598

2170/GAP

1. Sandprüfgerät zur Prüfung von Giessereisanden bzw. von aus Giessereisand hergestellten Probekörpern (7, 11) mit einer Druckbeaufschlagungseinrichtung (1) einem Druckwerkzeug (3) mittels welchem der Druck auf den Sand (22) oder Probekörper aufbringbar ist sowie mindestens einem Druckmessgerät (2), dadurch gekennzeichnet, dass das Druckwerkzeug (3) mit je einer, elektrische Signale erzeugenden Wegmess-Einrichtung (32) und Druckmesseinrichtung (31) versehen ist, welche mit einer elektrischen Auswerteinrichtung (37 - 44) wirkverbunden ist, dass diese Auswerteinrichtung mehrere elektrische Schaltkreise aufweist, mittels welchen jeweils die Druckfestigkeit, die Biegefestigkeit und die Verdichtbarkeit bestimmbar sind.

2. Sandprüfgerät nach Anspruch 1, dadurch gekennzeichnet, dass die Auswerteeinrichtung (37 - 44) eine optische Anzeige- (45) und/oder eine Messwert- Druckereinrichtung (46) aufweist.

3. Sandprüfgerät nach Anspruch 1 oder 2, dadurch gekennzeichnet, dass die Auswerteinrichtung (37 - 44) Schalteinrichtungen (5) aufweist, mit deren Hilfe die Anzeige- (45) und/oder Messwert- Druckereinrichtung auf eine

bestimmte Prüfart einstellbar ist.

4. Sandprüfgerät nach einem der Ansprüche 1 bis 3, dadurch gekennzeichnet, dass zwischen der Druckmesseinrichtung (31) und der Auswerteinrichtung (37 - 44) ein Maximalwertspeicher (47) angeordnet ist und der bei Prüfung auf Druck- bzw. Biegefestigkeit ermittelte Wert zum Zeitpunkt des Bruches des Probekörpers (7, 11) speicherbar und mittels der Auswerteinrichtung aus diesem Messwert und den geometrischen Daten des genormten Prüfkörpers die Druck- bzw. Biegefestigkeit in Kraft pro Fläche berechenbar ist.

5. Sandprüfgerät nach einem der Ansprüche 1 bis 4, dadurch gekennzeichnet, dass an der Druckbeaufschlagungseinrichtung (1) ein Druckregelventil (V3) angeordnet ist, mittels welchem bei der Verdichtbarkeitsprüfung ein bestimmter Ausgangsdruck im Prüfgerät unabhängig von dem in einer externen Druckquelle herschenden Druck einstellbar ist.

6. Sandprüfgerät nach Anspruch 5, dadurch gekennzeichnet, dass bei der Verdichtbarkeitsprüfung die Höhenverminderung einer zylinderförmigen Sandschüttung (22) bei einem bestimmten einstellbaren Druck mittels der Wegemesseinrichtung (32) messbar ist.

7. Sandprüfgerät nach einem der Ansprüche 1 bis 6, dadurch gekennzeichnet, dass die Druckbeaufschlagung mittels einer eigenen Druckquelle pneumatisch erfolgt.

8. Sandprüfgerät nach einem der Ansprüche 1 bis 7, dadurch gekennzeichnet, dass die Druckmesseinrichtung ein im Druckwerkzeug (3) angeordneter Quarzkristall (31) ist.

9. Sandprüfgerät nach einem der Ansprüche 1 bis 8, dadurch gekennzeichnet, dass die Wegmess-Einrichtung ein induktiver Wegaufnehmer (32) ist.

0042598

Fig.1

Fig.2

Fig.3

Fig. 4

2170 / GAP

## EUROPÄISCHER RECHERCHENBERICHT

**Europäisches Patentamt**

Nummer der Anmeldung

EP 81 10 4720

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 638 478 (H.W. DIETERT et al.) <br><br> * Spalte 5, Zeile 19 - Spalte 6, Zeile 21; Figuren 1,2,4 * <br><br>-- | 1,2,5, 6,9 |
| | DE - B - 1 648 448 (DAIMLER-BENZ A.G.) <br><br> * Spalte 3, Zeile 10 - Spalte 4, Zeile 13; Figur 1 * <br><br>-- | 1 |
| | CH - A - 522 216 (INSTITUT FUR WERKSTOFFKUNDE I, UNIVERSITAT KARLSRUHE) <br><br> * Spalte 3, Zeilen 42-56; Figur 1 * <br><br>-- | 1 |
| | US - A - 3 916 679 (H.P. VOLL et al.) <br><br> * Spalte 5, Zeile 25 - Spalte 6, Zeile 36; Figur 3 * <br><br>-- | 1 |
| | US - A - 4 000 644 (E.D. OPPEN- HEIMER) <br><br> * Spalte 4, Zeile 52 - Spalte 5, Zeile 20; Figur 6 * <br><br>-- | 1 |
| | DE - A - 2 932 288 (CHINOIN GYO-GYSZER ES VEGYESZETI TERMEKET GYARA RT, BUDAPEST) <br><br> * Seite 7, letzter Absatz - Seite 8, Absatz 1 * <br><br>-- ./. | 4 |

**KLASSIFIKATION DER ANMELDUNG (Int. Cl.³)**

G 01 N 3/00
33/24

**RECHERCHIERTE SACHGEBIETE (Int. Cl.³)**

G 01 N 3/00
3/08
3/10
3/20
33/24

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Den Haag | 22-09-1981 | KEMPIN |

EPA form 1503.1 06.78

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 812 257 (DR. KARL THOMAE GmbH)<br><br>* Seite 6, Absatz 3; Figur * | 7 | |
| | -- | | |
| | GB - A - 1 310 530 (W.D. CRAIG)<br><br>* Seite 1, Zeilen 57-61 * | 8 | |
| | ---- | | |

RECHERCHIERTE
SACHGEBIETE (Int. Cl. 3)